# EUROPEAN PATENT APPLICATION

(11) **EP 4 811 676 A1**
(43) Date of publication of application: **23.09.2026**
(21) Application number: 24902866.3
(22) Date of filing: 11.12.2024
(51) Int. Cl.: H04B 7/185

(54) **COMMUNICATION METHOD, AND APPARATUS**

(30) Priority: 12.12.2023 CN 202311710242
(71) Applicant: Huawei Technologies Co., Ltd., Shenzhen, Guangdong 518129 (CN)
(72) Inventor: QIAO, Yunfei, Shenzhen, Guangdong 518129 (CN)
(74) Representative: Körber, Martin Hans
(86) International application number: PCT/CN2024/138619
(87) International publication number: WO 2025/124448

(57) **Abstract**

This application provides a communication method and an apparatus, and relates to the field of wireless communication technologies, to improve access accuracy of a terminal device and avoid unnecessary access. **In** this application, the terminal device receives a first message from a first network device, where the first message includes first configuration information corresponding to a second network device, the first configuration information is associated with first time, and the first time is time at which the network device corresponding to the first configuration information allows access of the terminal device; and the terminal device is redirected to the second network device based on the first message. Based on the solution of this application, an access failure of the terminal device caused because the second network device has not covered a location of the terminal device can be avoided, thereby improving access accuracy of the terminal device and unnecessary access.

## Description

### CROSS-REFERENCE TO RELATED APPLICATIONS

This application claims priority to Chinese Patent Application No. 202311710242.5, filed with the China National Intellectual Property Administration on December 12, 2023 and entitled "COMMUNICATION METHOD AND APPARATUS", which is incorporated herein by reference in its entirety.

### TECHNICAL FIELD

This application relates to the field of wireless communication technologies, and in particular, to a communication method and an apparatus.

### BACKGROUND

With the development of information technologies, there is a growing demand for higher efficiency, flexibility, and diversity in communication. Currently, one of key development directions in the field of wireless communication is global mobile communication, and an important part of the global mobile communication is satellite communication. Satellite communication plays an irreplaceable role in some essential domains such as space communication, aeronautical communication, and maritime communication. Satellite communication features long communication distance, large coverage area, and flexible networking, and can provide services for both fixed terminals and mobile terminals.

Satellites move fast in space, while terminal devices on the ground move slowly compared with the satellites. Therefore, in satellite communication scenarios, impact of satellite movement on mobility management of the terminal device needs to be considered. For example, if handover is triggered because movement of a serving satellite accessed by a terminal device causes the terminal device to be located at an edge of a coverage region of the serving satellite, the serving satellite triggers the terminal device to perform a redirection operation when the current terminal device does not support handover. During redirection, the serving satellite sends, to the terminal device, a redirection message including frequency information of a target satellite, and the target satellite is a next satellite predicted by the serving satellite to cover the terminal device. Under the current redirection mechanism, after receiving the redirection message, the terminal device releases a radio resource control (radio resource control, RRC) connection to the current serving satellite, and accesses the target satellite. However, if the target satellite has not yet covered a location of the terminal device, the access attempt by the terminal device will fail.

### SUMMARY

This application provides a communication method and an apparatus, to improve access accuracy of a terminal device and avoid unnecessary access.

According to a first aspect, an embodiment of this application provides a communication method. The method may be performed by a terminal device or a module (for example, a chip) used in the terminal device. For example, the terminal device performs the method. The method includes: The terminal device receives a first message from a first network device, where the first message includes first configuration information corresponding to a second network device, the first configuration information is associated with first time, and the first time is time at which the network device corresponding to the first configuration information allows access of the terminal device; and the terminal device is redirected to the second network device based on the first message.

According to the foregoing method, the first message received by the terminal device includes the first configuration information corresponding to the second network device, the terminal device may determine, based on the first configuration information, the first time corresponding to the second network device, and the first time is the time at which the second network device allows the access of the terminal device. Based on this, the terminal device may be redirected, based on the first message, to the second network device at the time at which the access is allowed by the second network device, to avoid an access failure caused because the second network device has not covered a location of the terminal device, thereby improving access accuracy of the terminal device and avoiding unnecessary access.

In a possible design, the first configuration information corresponding to the second network device indicates the second network device. The terminal device receives ephemeris information of the second network device; and the terminal device determines, based on the ephemeris information of the second network device, the first time corresponding to the second network device.

According to the foregoing method, the first network device may indicate the second network device to the terminal device based on the first message, and the terminal device may accurately determine, based on the ephemeris information, the first time at which the second network device allows the access of the terminal device, so that the terminal device is redirected to the second network device based on the first time corresponding to the second network device, to avoid the access failure.

In a possible design, the first configuration information corresponding to the second network device indicates the first time.

According to the foregoing method, the first network device may indicate, to the terminal device based on the first message, the first time at which the second network device allows the access of the terminal device, so that the terminal device is redirected to the second network device based on the first time, to avoid the access failure.

In a possible design, the first message includes first configuration information corresponding to a plurality of candidate network devices. The terminal device determines the second network device from the plurality of candidate network devices.

According to the foregoing method, the first network device may preconfigure, for the terminal device based on the first message, the first configuration information corresponding to the plurality of candidate network devices. When the first network device encounters an emergency and cannot configure the configuration information of the second network device, the terminal device may select the second network device for redirection from the plurality of candidate network devices, to quickly trigger the terminal device to perform a redirection operation.

In a possible design, the first message further includes second configuration information corresponding to each candidate network device, and the second configuration information is used to represent an access capability of a corresponding candidate network device. The terminal device determines the second network device from the plurality of candidate network devices based on the second configuration information corresponding to each candidate network device.

According to the foregoing method, the terminal device may determine the second network device from the plurality of candidate network devices based on the access capability of the candidate network device, for example, select a candidate network device with a better access capability as the second network device, to improve performance of the terminal device after the terminal device is redirected to the second network device.

In a possible design, the second configuration information includes load information and/or priority information of a corresponding candidate network device.

According to the foregoing method, the terminal device may select a better candidate network device as the second network device based on the load information and/or the priority information of the candidate network device, for example, select a candidate network device with low load or a high priority as the second network device, to improve the performance of the terminal device after the terminal device is redirected to the second network device.

In a possible design, the terminal device receives first indication information from the first network device, where the first indication information indicates the second network device; and the terminal device determines the second network device from the plurality of candidate network devices based on the first indication information.

According to the foregoing method, the first network device preconfigures, for the terminal device based on the first message, the first configuration information corresponding to the plurality of candidate network devices. When the terminal device needs to be triggered to perform the redirection operation, the first network device may directly indicate the second network device to the terminal device, to quickly trigger the terminal device to perform the redirection operation.

In a possible design, the terminal device determines that a first redirection trigger condition among at least one redirection trigger condition is met; and the terminal device determines that a candidate network device among the plurality of candidate network devices that corresponds to the first redirection trigger condition is the second network device.

According to the foregoing method, the first network device preconfigures, for the terminal device based on the first message, the first configuration information corresponding to the plurality of candidate network devices. When determining, based on the preset redirection trigger condition, that the redirection operation needs to be performed, the terminal device may be directly redirected to the corresponding candidate network device that currently meets the condition, to quickly trigger the terminal device to perform the redirection operation.

In a possible design, the first configuration information further includes type indication information of a corresponding network device.

In a possible design, the terminal device determines, based on the type indication information, a procedure of redirecting to the second network device.

According to the foregoing method, the terminal device receives the type indication information of the second network device sent by the first network device, so that when performing the redirection operation, the terminal device can accurately initiate the redirection operation for a type of the second network device.

In a possible design, the first message includes identification information of at least one terminal group, and the at least one terminal group includes the terminal device.

According to the foregoing method, the first network device may trigger the redirection operation for the at least one terminal group, to perform batch redirection indication on terminal devices included in the terminal group.

According to a second aspect, an embodiment of this application provides a communication method. The method may be performed by a terminal device or a module (for example, a chip) used in the terminal device. For example, the terminal device performs the method. The method includes: The terminal device receives second indication information from a first network device, where the second indication information indicates the terminal device to perform state transition; the terminal device transits from current connected state to inactive state; and after a start condition for the terminal device to perform state recovery is met, the terminal device transits from the inactive state to the connected state, and accesses a third network device.

According to the foregoing method, when the first network device cannot provide a service for the terminal device, the first network device may indicate the terminal device to transit from the connected state to the inactive state, and suspend providing the service for the terminal device. After determining that the start condition is met, the terminal device transits to the connected state and accesses the third network device, to avoid an access failure caused when the terminal device initiates access when an access condition is not met.

In a possible design, the terminal device receives third indication information from the first network device, where the third indication information indicates the start condition.

According to the foregoing method, the first network device may indicate, to the terminal device, the start condition for performing state recovery, so that the terminal device can accurately perform state recovery based on the start condition.

In a possible design, the start condition includes at least one of the following: time information for the terminal device to perform state recovery, location information of the terminal device when the terminal device performs state recovery, and signal quality of a downlink signal received by the terminal device meeting a threshold.

In a possible design, the terminal device receives fourth indication information from the first network device, where the fourth indication information includes access information of the third network device.

According to the foregoing method, the terminal device can accurately access the third network device based on the access information of the third network device.

According to a third aspect, an embodiment of this application provides a communication method. The method may be performed by a first network device or a module (for example, a chip) used in the first network device. For example, the first network device performs the method. The method includes: The first network device generates a first message, where the first message includes first configuration information corresponding to a second network device, the first configuration information is associated with first time, the first time is time at which the network device corresponding to the first configuration information allows access of a terminal device, and the second network device is a network device to which the terminal device is to be redirected; and the first network device sends the first message to the terminal device.

In a possible design, the first configuration information corresponding to the second network device indicates the second network device.

In a possible design, the first network device sends ephemeris information of the second network device to the terminal device, where the ephemeris information of the second network device is used to determine the first time corresponding to the second network device.

In a possible design, the first configuration information corresponding to the second network device indicates the first time.

In a possible design, the first message includes first configuration information corresponding to a plurality of candidate network devices, and the plurality of candidate network devices include the second network device.

In a possible design, the first message further includes second configuration information corresponding to each candidate network device, and the second configuration information is used to represent an access capability of a corresponding candidate network device.

In a possible design, the second configuration information includes load information and/or priority information of a corresponding candidate network device.

In a possible design, the first network device sends first indication information to the terminal, where the first indication information indicates the second network device.

In a possible design, the first configuration information further includes type indication information of a corresponding network device.

In a possible design, the first message includes identification information of at least one terminal group, and the at least one terminal group includes the terminal device.

According to a fourth aspect, an embodiment of this application provides a communication method. The method may be performed by a first network device or a module (for example, a chip) used in the first network device. For example, the first network device performs the method. The method includes: The first network device generates second indication information, where the second indication information indicates a terminal device to transit from current connected state to inactive state; and the first network device sends the second indication information to the terminal device.

In a possible design, the first network device generates third indication information, where the third indication information indicates a start condition for the terminal device to perform state recovery, and the state recovery includes transiting from the inactive state to the connected state; and sends the third indication information to the terminal device.

In a possible design, the start condition includes at least one of the following: time information for the terminal device to perform state recovery, location information of the terminal device when the terminal device performs state recovery, and signal quality of a downlink signal received by the terminal device meeting a threshold.

In a possible design, the first network device sends fourth indication information to the terminal device, where the fourth indication information includes access information of a third network device.

According to a fifth aspect, a communication apparatus is provided. The communication apparatus may be the terminal device or the first network device. The communication apparatus may include a communication module and a processing module, to perform any one of the first aspect to the fourth aspect, or perform any one of the possible implementations of the first aspect to the fourth aspect. The communication module is configured to perform receiving and sending operations, for example, functions related to sending and receiving. The communication module may be referred to as a transceiver unit. Optionally, the communication module includes a receiving module and a sending module. The processing module is configured to perform a processing operation.

In a design, the communication apparatus is a communication chip, the processing module may be one or more processors or processor cores, and the communication module may be an input/output circuit, an input/output interface, or an antenna port of the communication chip.

In another design, the communication module may be a transmitter and a receiver, or the communication module may be a transmitter machine and a receiver machine.

Optionally, the communication apparatus further includes modules that may be configured to perform any one of the first aspect to the fourth aspect, or perform any one of the possible implementations of the first aspect to the fourth aspect.

According to a sixth aspect, a communication apparatus is provided. The communication apparatus may be the terminal device or the first network device. The communication apparatus may include a processor and a memory, to perform any one of the first aspect to the fourth aspect, or perform any one of the possible implementations of the first aspect to the fourth aspect. Optionally, the communication apparatus further includes a transceiver. The memory is configured to store a computer program or instructions. The processor is configured to: invoke the computer program or the instructions from the memory and run the computer program or the instructions. When the processor executes the computer program or the instructions in the memory, the communication apparatus is enabled to perform any one of the first aspect to the fourth aspect, or perform any one of the possible implementations of the first aspect to the fourth aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

According to a seventh aspect, a communication apparatus is provided. The communication apparatus may be the terminal device or the first network device. The communication apparatus may include a processor, to perform any one of the first aspect to the fourth aspect, or perform any one of the possible implementations of the first aspect to the fourth aspect. The processor is coupled to a memory. Optionally, the communication apparatus further includes the memory. Optionally, the communication apparatus further includes a communication interface, and the processor is coupled to the communication interface.

In an implementation, when the communication apparatus is the terminal device or the first network device, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to an eighth aspect, a computer-readable storage medium is provided. The computer-readable storage medium stores a computer program or instructions. When the computer program or the instructions are executed by a processor, any one of the first aspect to the fourth aspect, or any one of the possible implementations of the first aspect to the fourth aspect is implemented.

According to a ninth aspect, a computer program product storing instructions is provided. When the instructions are run by a processor, any one of the first aspect to the fourth aspect, or any one of the possible implementations of the first aspect to the fourth aspect is implemented.

According to a tenth aspect, a communication apparatus is provided. The communication apparatus includes a processor, and may further include a storage medium. The storage medium stores instructions. When the instructions are executed by the processor, any one of the first aspect to the fourth aspect, or any one of the possible implementations of the first aspect to the fourth aspect is implemented. The communication apparatus may be a chip system. The chip system may include a chip, or may include a chip and another discrete component.

According to an eleventh aspect, a communication system is further provided. The communication system includes the terminal device according to the first aspect or the second aspect, and the first network device according to the third aspect or the fourth aspect.

According to a twelfth aspect, this application further provides a chip, including a processor. The processor is coupled to a memory and is configured to: read and execute program instructions stored in the memory, so that the chip implements any one of the first aspect to the fourth aspect, or any one of the possible implementations of the first aspect to the fourth aspect.

For the foregoing aspects from the third aspect to the twelfth aspect and technical effect that can be achieved in the foregoing aspects, refer to the descriptions of the technical effect that can be achieved in the first aspect or the second aspect or in various possible solutions in the aspects. Details are not described herein again.

### BRIEF DESCRIPTION OF DRAWINGS

FIG. 1 is a diagram of an architecture of a mobile communication system according to an embodiment of this application;
FIG. 2 is a diagram of an architecture of a non-terrestrial network communication system according to an embodiment of this application;
FIG. 3 is a diagram of an architecture of a satellite mobile communication system according to an embodiment of this application;
FIG. 4 is a diagram of a relationship between a satellite and a terminal device according to an embodiment of this application;
FIG. 5 is a flowchart of a communication method according to an embodiment of this application;
FIG. 6 is a flowchart of a communication method according to an embodiment of this application;
FIG. 7 is a diagram of a structure of a communication apparatus according to an embodiment of this application; and
FIG. 8 is a diagram of a structure of a communication apparatus according to an embodiment of this application.

### DESCRIPTION OF EMBODIMENTS

To describe technical solutions in embodiments of this application more clearly, the following describes, in detail with reference to accompanying drawings, a communication method and an apparatus provided in embodiments of this application.

Technologies provided in embodiments of this application may be applied to various communication systems, for example, a non-terrestrial network (non-terrestrial network, NTN) system like a satellite communication system, a high-altitude platform station (high-altitude platform station, HAPS) communication system, or an unmanned aerial vehicle, an integrated communication and navigation (integrated communication and navigation, IcaN) system, a global navigation satellite system (global navigation satellite system, GNSS), and an ultra-dense low-orbit satellite communication system. The communication system to which embodiments of this application are applied may be converged with a terrestrial communication system. For example, the terrestrial communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), a future communication network, and the like.

A network element in the communication system may send a signal to another network element or receive a signal from another network element. The signal may include information, signaling, data, or the like. The network element may alternatively be replaced with an entity, a network entity, a device, a communication device, a communication module, a node, a communication node, or the like. In embodiments of this application, the network element is used as an example for description.

For example, the communication system may include at least one terminal device and at least one network device. The network device may send a downlink signal to the terminal device, and/or the terminal device may send an uplink signal to the network device. In addition, it may be understood that, if the communication system includes a plurality of terminal devices, the plurality of terminal devices may also send signals to each other. In other words, both a signal sending network element and a signal receiving network element may be terminal devices.

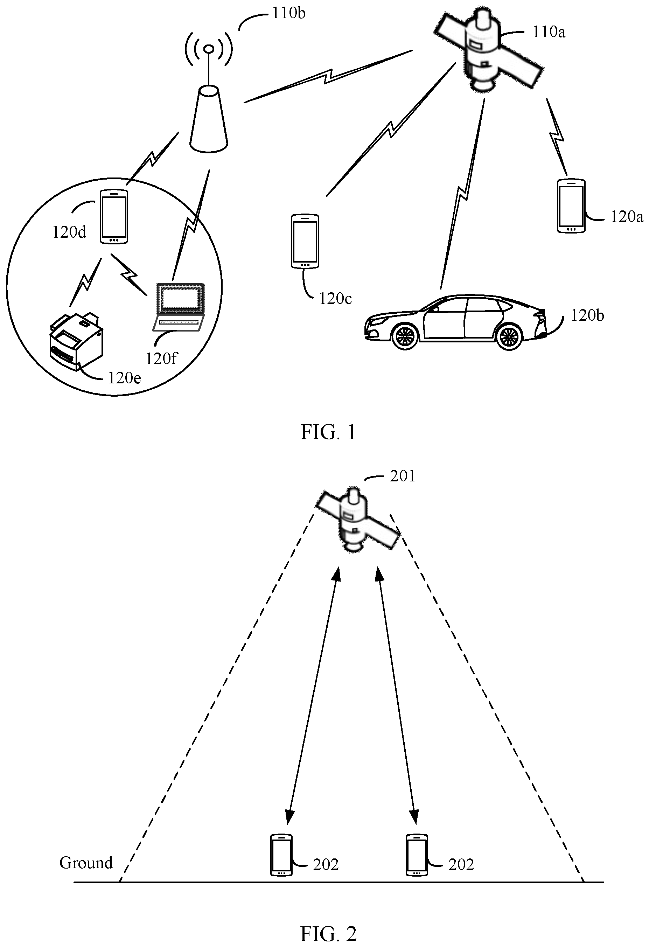

FIG. 1 shows an architecture of a mobile communication system. The communication system may include at least one network device (for example, 110a and 110b in FIG. 1) and at least one terminal device (for example, 120a, 120b, 120c, 120d, 120e, and 120f in FIG. 1). It should be understood that the communication system may include more or fewer network devices or terminal devices. The network device or the terminal device may be hardware, or may be software obtained through function division, or may be a combination thereof. As shown in FIG. 1, the network device 110a may send downlink data to the terminal device 120a, the terminal device 120b, and the terminal device 120c, or may receive uplink data sent by the terminal device 120a, the terminal device 120b, and the terminal device 120c. In addition, the terminal device 120d, the terminal device 120e, and the terminal device 120f may alternatively form a communication system. For example, the terminal device 120d may send data to the terminal device 120e or the terminal device 120f. The network device and the terminal device may communicate with each other via another device or network element. For example, the network device 110a may send downlink data to the terminal device 120d via the network device 110b.

The network device in embodiments of this application is a node in a radio access network (radio access network, RAN), and may also be referred to as a base station, or may be referred to as a RAN node (or device). Currently, some examples of an access network device 101 are an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP) or a transmission reception point (transmission reception point, TRP), a satellite, and an unmanned aerial vehicle. The network device may alternatively be a base station (next generation NodeB, gNB), a TRP, or a TP in a 5G system, or may be one antenna panel or one group of antenna panels (including a plurality of antenna panels) of a base station in a 5G system. In addition, the network device may alternatively be a network node that forms a gNB or a TP, for example, a BBU, a distributed unit (distributed unit, DU), or the like. Alternatively, the network device may be a device responsible for a network side function in a device-to-device (device-to-device, D2D) communication system, a machine-to-machine (machine-to-machine, M2M) communication system, an internet of things (Internet of Things, IoT) communication system, an internet of vehicles communication system, or another communication system. Alternatively, the network device may be a next-generation base station in a 6th generation (6th generation, 6G) mobile communication system or a base station in a future mobile communication system. A specific technology and a specific device form that are used by the network device are not limited in embodiments of this application.

In another possible scenario, a plurality of RAN nodes collaborate to assist the terminal in implementing radio access, and different RAN nodes respectively implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an open-central unit (open-central unit, O-CU) or an open CU, the DU may also be referred to as an open-distributed unit (open-distributed unit, O-DU), the CU-CP may also be referred to as an open-central unit-control plane (open-central unit-control plane, O-CU-CP), the CU-UP may also be referred to as an open-central unit-user plane (open-central unit-user plane, O-CU-UP), and the RU may also be referred to as an open-radio unit (open-radio unit, O-RU). For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like, is a device that provides voice or data connectivity for a user, or may be an internet of things device. For example, the terminal device includes a handheld device, a vehicle-mounted device, or the like having a wireless connection function. Currently, the terminal device may be a mobile phone (mobile phone), a tablet computer, a notebook computer, a palmtop computer, a mobile internet device (mobile internet device, MID), a wearable device (for example, a smart watch, a smart band, or a pedometer), a vehicle-mounted device (for example, a car, a bicycle, an electric vehicle, an airplane, a ship, a train, or a high-speed railway), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot air balloon, an unmanned aerial vehicle, or an airplane), or the like. The terminal device may alternatively be another device having a function of a terminal. For example, the terminal device may alternatively be a device that functions as a terminal in D2D communication.

In embodiments of this application, the function of the terminal device may also be performed by a module (for example, a chip or a modem) in the terminal device, or may be performed by an apparatus including the function of the terminal device.

Based on the description of the architecture of the communication system shown in FIG. 1, an example in which embodiments of this application are applied to a non-terrestrial network (non-terrestrial network, NTN) communication system is used for description. An NTN includes a satellite network, a high-altitude platform station, an unmanned aerial vehicle, and the like, is significantly characterized by global coverage, long-distance transmission, flexible networking, easy deployment, being not limited by geographical conditions, and the like, and has been widely applied to a plurality of fields such as maritime communication, positioning and navigation, disaster relief, scientific experiments, video broadcasting, and earth observation. A terrestrial 5G network and a satellite network are integrated and complement each other to form an integrated communication network that provides seamless global coverage by sea, land, air, space, and ground, to meet a plurality of ubiquitous service requirements of users. An example in which NTN communication is satellite communication, in other words, the NTN communication system is a satellite system is used in embodiments of this application. As shown in FIG. 2, the NTN communication system includes a satellite 201 and terminal devices 202. For explanations of the terminal devices 202, refer to the foregoing related descriptions of the terminal device. The satellite 201 may also be referred to as a high-altitude platform station, a high-altitude aircraft, or a satellite base station. When the NTN communication system is associated with a terrestrial network communication system, the satellite 201 may be considered as one or more network devices in an architecture of the terrestrial network communication system. The satellite 201 provides a communication service for the terminal device 202, and the satellite 201 may be further connected to a core network device. For a structure and a function of the satellite 201, refer to the foregoing descriptions of the network device. For a communication manner between the satellite 201 and the terminal device 202, refer to the descriptions in FIG. 1. Details are not described herein again. The solutions in embodiments of this application may also be directly applied to a terrestrial communication network, or may be applied to a terrestrial communication network after being slightly modified in a method that can be figured out by a person skilled in the art. Details are not described.

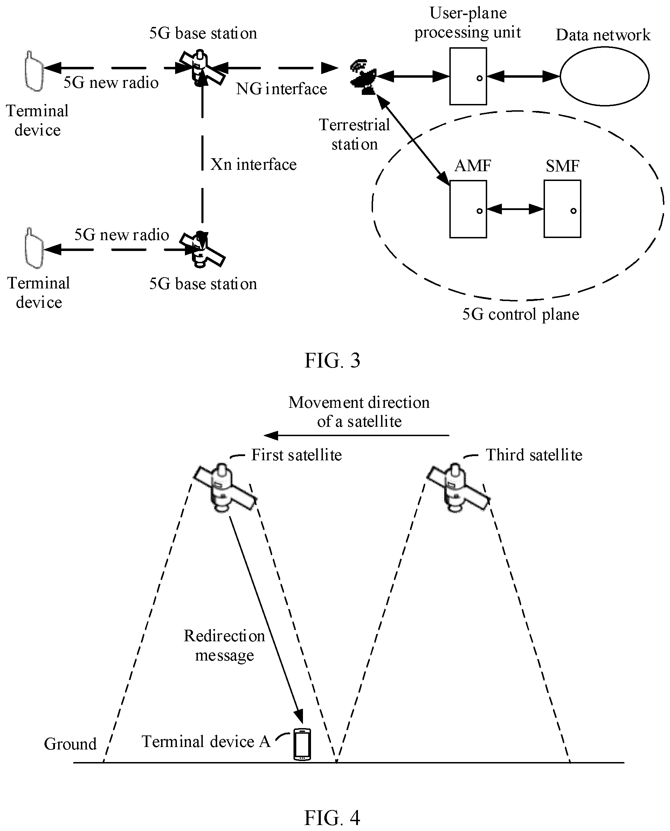

An example in which the NTN communication system is a satellite mobile communication system is used for description. FIG. 3 is a diagram of an architecture of a satellite mobile communication system to which an embodiment of this application is applied. As shown in FIG. 3, the satellite mobile communication system includes two terminal devices (which may be briefly referred to as terminals), two satellite base stations (two 5G base stations shown in FIG. 1), a terrestrial station, and a 5G core network. The satellite base station and the terminal device may communicate with each other through 5G new radio. The two satellite base stations may communicate with each other through an Xn interface. The satellite base station is connected to the terrestrial station through an NG interface. The terrestrial station is connected to the core network through the NG interface, and the NG interface may be in a wired form or a wireless form. A satellite may usually form a plurality of beams, and each beam is similar to a cell/sector in a terrestrial mobile communication system (for example, LTE/NR).

The 5G base station is mainly configured to: provide a wireless access service, schedule a wireless resource to an accessed terminal device, and provide a reliable wireless transmission protocol, a data encryption protocol, and the like.

The 5G core network is mainly configured to provide services such as user access control, mobility management, session management, user security authentication, and charging. The core network includes a plurality of functional units, and the functional units may be classified into control-plane functional units and user-plane processing units. The control-plane functional unit (or referred to as a network element) includes an access and mobility management function (access and mobility management function, AMF) and a session management function (session management function, SMF). The AMF is configured to be responsible for user access management, security authentication, and mobility management. The SMF is configured to be responsible for session management (including session establishment, modification, and release) of the terminal device, selection and reselection of a user plane function network element, internet protocol (internet protocol, IP) address allocation of the terminal device, quality of service (quality of service, QoS) control, selection of a UPF network element that provides a packet forwarding function, and the like.

The user-plane processing unit (or referred to as a network element) includes a user plane function (user plane function, UPF) unit. The UPF is configured to be responsible for functions such as managing user plane data transmission and traffic statistics collection.

The terrestrial station is mainly responsible for forwarding signaling and service data between the satellite and the base station or between the satellite and the core network.

The 5G new radio indicates a wireless link between the terminal device and the base station.

The Xn interface indicates an interface between the 5G satellite base stations, and is mainly used for signaling exchange like handover.

The NG interface indicates an interface between the 5G base station and the 5G core network, an interface between the terrestrial station and the core network, or an interface between the satellite base station and the terrestrial station (in this case, the interface is a wireless link), and is mainly used for exchange of signaling like non-access stratum (non-access stratum, NAS) signaling of the core network and service data of a user.

In embodiments of this application, the network device in the terrestrial communication system and the satellite in the NTN communication system are collectively considered as network devices. An apparatus configured to implement a function of a network device may be a network device, or may be an apparatus that can support the network device in implementing the function, for example, a chip system. The apparatus may be mounted in the network device. When the technical solutions provided in embodiments of this application are described below, an example in which an apparatus configured to implement a function of a network device is a satellite is used to describe the technical solutions provided in embodiments of this application. It may be understood that, when the method provided in embodiments of this application is applied to the terrestrial network communication system, an action performed by the satellite may be performed by a base station or a network device.

For ease of understanding embodiments of this application, the following describes an application scenario of this application. The application scenario described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a new scenario emerges.

In satellite communication, a terminal device may access a satellite and receive a service provided by the satellite. Because the satellite moves fast in space, in a satellite communication scenario, movement of the satellite needs to be considered, to perform mobility management on the terminal device. The mobility management of the terminal device includes reselection, handover, redirection, and the like. For example, after the terminal device accesses the satellite, as the satellite moves or satellite load increases, signal quality of a downlink signal received by the terminal device deteriorates. The terminal device performs cell reselection, and reselects, based on the signal quality, a suitable cell to camp on. The handover of the terminal device is a process in which the terminal device is handed over from a first satellite currently accessed by the terminal device to a second satellite. The redirection of the terminal device means that when the terminal device needs to be handed over from the first satellite to the second satellite, if the current terminal device does not support the handover (for example, the second satellite cannot provide a service for the terminal device due to a type of the terminal device), the first satellite sends a redirection message to the terminal device, where the redirection message includes related information about a third satellite, to indicate the terminal device to be redirected to the third satellite.

Because the satellite moves in the space regularly, a movement rule of the satellite may be described based on a satellite ephemeris. During redirection, the first satellite may perform prediction based on ephemeris information of satellites, to predict a next satellite that covers a location of the terminal device. As shown in FIG. 4, a terminal device A currently accesses a first satellite, but as the first satellite moves, when the terminal device A is located at an edge location of a coverage region of the first satellite, the first satellite triggers the terminal device A to perform a redirection operation. If the first satellite determines, based on ephemeris information of satellites, that a next satellite that covers a location of the terminal device is a third satellite, the first satellite sends a redirection message to the terminal device, to indicate the terminal device to be redirected to the third satellite. However, based on a current redirection manner, after receiving the redirection message, the terminal device releases an RRC connection to the first satellite, and accesses the third satellite. Because the third satellite currently has not covered the location of the terminal device, if the terminal device initiates access to the third satellite in this case, the terminal device fails to access the third satellite.

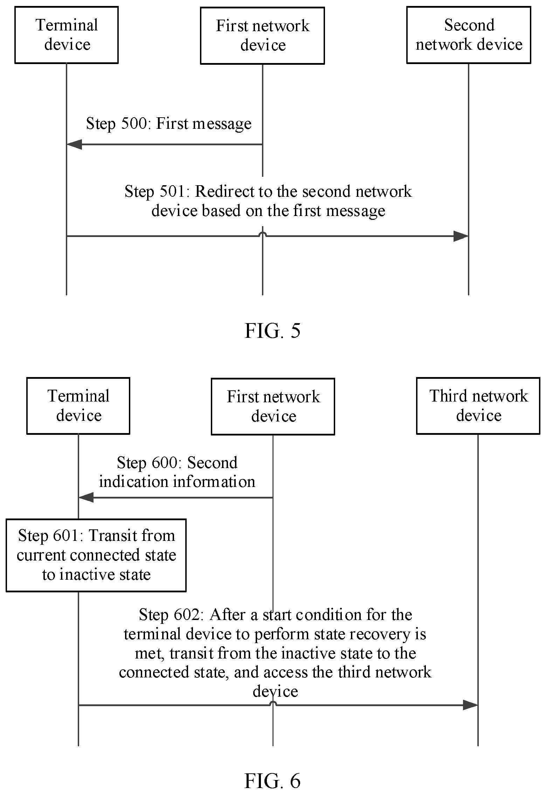

In view of this, embodiments of this application provide a communication method and an apparatus. After receiving a redirection message sent by a currently accessed satellite, a terminal device determines time at which a redirection operation is initiated. After the determined time is reached, the terminal device initiates the redirection operation, to avoid an access failure caused because a satellite to be redirected to has not covered a location of the terminal device. The following further describes, in detail with reference to FIG. 5, the communication method provided in embodiments of this application.

FIG. 5 shows a communication method according to an embodiment of this application. The method may specifically include the following steps.

Step 500: A terminal device receives a first message from a first network device.

Correspondingly, the first network device generates the first message, and sends the first message to the terminal device.

The first network device may be a network device currently accessed by the terminal device (for example, a satellite that currently covers a location of the terminal device, and the terminal device accesses the satellite).

The first message includes first configuration information corresponding to a second network device, the first configuration information is associated with first time, and the first time is time at which the network device corresponding to the first configuration information allows access of the terminal device.

The second network device is a network device to which the terminal device initiates a redirection operation for access. For example, the second network device may be a next network device that covers the location of the terminal device after a coverage region of the first network device leaves the location of the terminal device.

For example, the time at which the network device allows the access of the terminal device may be understood as time at which the network device covers the location of the terminal device. When the network device covers the location of the terminal device, the terminal device may access the network device, and the network device provides a service for the terminal device. The first time may be a time range, for example, a time range within which the network device covers the location of the terminal device. Alternatively, the first time may be a moment, for example, a moment at which the network device starts to cover the location of the terminal device, or any moment within a time range within which the network device covers the location of the terminal device.

Step 501: The terminal device is redirected to the second network device based on the first message.

After receiving the first message, the terminal device may determine, based on the first configuration information that corresponds to the second network device and that is included in the first message, the first time corresponding to the second network device. If the first time corresponding to the second network device is the time at which the second network device allows the access of the terminal device, the terminal device may perform redirection based on the first time corresponding to the second network device.

In this embodiment of this application, each network device may correspond to one piece of first configuration information, and the first configuration information is associated with first time corresponding to each network device. For example, the terminal device may determine, based on the first configuration information corresponding to each network device, the first time corresponding to each network device, where the first time corresponding to the network device is time at which the network device allows access of the terminal device.

Because the first message received by the terminal device in this embodiment of this application includes the first configuration information corresponding to the second network device, the terminal device may determine, based on the first configuration information corresponding to the second network device, the first time corresponding to the second network device, and the first time corresponding to the second network device is the time at which the second network device allows the access of the terminal device. Based on this, the terminal device may be redirected, based on the first message, to the second network device at the time at which the access is allowed by the second network device, to avoid an access failure caused because the second network device has not covered the location of the terminal device.

For step 500, the first network device may send the first message to the terminal device in different cases. In different cases, functions and/or message types of the first message sent by the first network device to the terminal device may be different. The following separately describes different cases.

### Case 1:

When determining to trigger the terminal device to perform the redirection operation, the first network device sends the first message to the terminal device, where the first message indicates the terminal device to perform the redirection operation.

For example, the first message may be a redirection message, or may be referred to as an RRC connection release message. The first message indicates the terminal device to release an RRC connection to the first network device, and perform the redirection operation.

The first message may include first configuration information and a configuration parameter that correspond to at least one network device. The first configuration information corresponding to the network device is associated with first time corresponding to the network device, and the configuration parameter may include frequency information, SMTC information, and the like.

The following describes content of the first message in detail.

When the first message carries first configuration information and a configuration parameter that correspond to one network device, the first message may carry the first configuration information and a configuration parameter that correspond to the second network device. Correspondingly, after receiving the first message, the terminal device determines, based on the first configuration information that corresponds to the second network device and that is carried in the first message, the first time corresponding to the second network device, and is redirected to the second network device based on the first time corresponding to the second network device.

When the first message carries first configuration information and configuration parameters that correspond to a plurality of network devices, the first message may carry first configuration information and configuration parameters that correspond to a plurality of candidate network devices. Correspondingly, after receiving the first message, the terminal device determines the second network device from the plurality of candidate network devices. Then, the terminal device determines, based on the first configuration information corresponding to the second network device, the first time corresponding to the second network device, and is redirected to the second network device based on the first time corresponding to the second network device.

The following separately provides descriptions based on different information content carried in the first message.
1. The first message includes the first configuration information and the configuration parameter that correspond to the second network device.

When the first network device determines that the terminal device meets a redirection condition (for example, the terminal device is located at an edge location of the coverage region of the first network device, or the first network device is currently overloaded), the first network device determines that the terminal device is redirected to the second network device.

First configuration information corresponding to the second network device:
A. The first configuration information may indicate the second network device. For example, the first configuration information is identification information of the second network device. The terminal device may determine, based on the first configuration information corresponding to the second network device, the first time corresponding to the second network device.

The terminal device may determine the first time in the following manner:
The terminal device receives ephemeris information of the second network device, and determines the first time based on the ephemeris information of the second network device.

The terminal device may obtain the ephemeris information of the second network device from a received system message. The terminal device determines the first time based on the ephemeris information of the second network device and the location of the terminal device.

In this embodiment of this application, the first network device may send the system message, where the system message includes ephemeris information of a plurality of network devices. Correspondingly, the terminal device receives the system message from the first network device, and the terminal device obtains the ephemeris information of the second network device from the received system message based on the second network device indicated by the first configuration information (for example, the identification information of the second network device).

For example, the system message sent by the first network device may be a system information block 19 (system information block 19, SIB 19), and the first network device may send the SIB 19 through broadcast, where the SIB 19 includes the ephemeris information of the plurality of network devices.

B. The first configuration information may indicate the first time. After determining that the terminal device is redirected to the second network device, the first network device may determine, based on the ephemeris information of the second network device and the location of the terminal device, that the time at which the second network device covers the location of the terminal device is the first time. For example, the first time may be a time range within which the second network device covers the location of the terminal device. Alternatively, the first time may be a moment within a time range within which the second network device covers the location of the terminal device, for example, a moment at which the second network device starts to cover the location of the terminal device.

When the first configuration information indicates the first time (for example, the first configuration information is the first time corresponding to the second network device), the terminal device performs redirection based on the first time indicated by the first configuration information.

The configuration parameter corresponding to the second network device includes but is not limited to:
frequency information and SMTC information

Details are as follows:
(1) The frequency information of the second network device may be a radio frequency of the second network device, and the terminal device may access the second network device based on the frequency information.
(2) The SMTC information may indicate information such as an offset, a period, and duration for measuring an SSB by the terminal device, or the SMTC information may include an offset of a downlink timing of the second network device relative to a downlink timing of the first network device.

Optionally, the configuration parameter of the second network device may further include assistance information of the second network device, where the assistance information may include information such as ephemeris information and a synchronization parameter (for example, a common (common) timing advance (timing advance, TA)).

The terminal device receives the first message, determines the first time based on the first configuration information corresponding to the second network device in the first message, and is redirected to the second network device based on the first time.

After determining the first time corresponding to the second network device, the terminal device may be redirected to the second network device in the following manner:
If the first time is the time range, the terminal device may be redirected to the second network device within the time range indicated by the first time. If the first time is the moment, for example, the moment is the moment at which the second network device starts to cover a region in which the terminal device is located, the terminal device may be redirected to the second network device at the moment indicated by the first time or within specific duration after the moment.

Optionally, the first configuration information may further include type indication information of a corresponding network device. The type indication information may indicate a type of a corresponding network device. For example, the type of the network device may be a terrestrial network device, a non-terrestrial network device, or relay user equipment (UE).

Correspondingly, the terminal device may determine, based on type indication information in the first configuration information corresponding to the second network device, a procedure of redirecting to the second network device.

For example, if the type indication information indicates that a type of the second network device is the terrestrial network device or the non-terrestrial network device, the terminal device determines to initiate a Uu interface setup procedure to the second network device. If the type indication information indicates that the type of the second network device is the relay UE, the terminal device determines to initiate a PC-5 interface setup procedure to the second network device.

In this embodiment of this application, the setup procedure initiated by the terminal device to the second network device may be implemented based on an existing access procedure. For example, the setup procedure initiated by the terminal device to the second network device may include the Uu interface setup procedure and the PC-5 interface setup procedure.

2. The first message includes the first configuration information and the configuration parameters that correspond to the plurality of candidate network devices.

When the first network device determines that the terminal device meets a redirection condition (for example, the terminal device is located at an edge location of the coverage region of the first network device, or the first network device is currently overloaded), the first network device determines the second network device from the plurality of candidate network devices.

First configuration information corresponding to the candidate network device:
A. The first configuration information may indicate the candidate network device. For example, the first configuration information is identification information of the candidate network device. The terminal device may determine, based on the first configuration information corresponding to the candidate network device, first time corresponding to the candidate network device.

For a specific manner in which the terminal device determines the first time corresponding to the candidate network device, refer to the foregoing manner in which the terminal device determines the first time corresponding to the second network device. Details are not described herein again.

B. The first configuration information may indicate the first time. The first network device may determine, based on ephemeris information of the candidate network device and the location of the terminal device, that time at which the candidate network device covers the location of the terminal device is the first time. For example, the first time may be a time range within which the candidate network device covers the location of the terminal device. Alternatively, the first time may be a moment within a time range within which the candidate network device covers the location of the terminal device, for example, a moment at which the candidate network device starts to cover the location of the terminal device.

The configuration parameter corresponding to the candidate network device includes but is not limited to:
frequency information and SMTC information

Details are as follows:
(1) The frequency information of the candidate network device may be a radio frequency of the candidate network device, and the terminal device may access the candidate network device based on the frequency information.
(2) The SMTC information may indicate information such as an offset, a period, and duration for measuring an SSB by the terminal device, or the SMTC information may include an offset of a downlink timing of the candidate network device relative to a downlink timing of the first network device.

Optionally, the configuration parameter of the candidate network device may further include assistance information of the candidate network device, where the assistance information may include information such as ephemeris information and a synchronization parameter (for example, a common TA).

When the first message includes the first configuration information and the configuration parameters that correspond to the plurality of candidate network devices, the first message may further include second configuration information corresponding to each candidate network device.

The second configuration information corresponding to the candidate network device may be used to represent an access capability of a corresponding candidate network device. For example, the second configuration information may include load information and/or priority information of the candidate network device.

After receiving the first message, the terminal device may determine the second network device from the plurality of candidate network devices based on the second configuration information corresponding to each candidate network device.

For example, when the first message includes the configuration parameters of the plurality of candidate network devices, the terminal device may select, from the plurality of candidate network devices based on the second configuration information corresponding to each candidate network device, a candidate network device with a good access capability as the second network device to be redirected to.

The second configuration information includes load information and/or priority information of a corresponding candidate network device.

For example, when the second configuration information is the load information, the terminal device may select, from the plurality of candidate network devices, a candidate network device with low load as the second network device to be redirected to. For another example, when the second configuration information is the priority information, the terminal device may select, from the plurality of candidate network devices, a candidate network device with a high priority as the second network device to be redirected to.

After determining the second network device from the plurality of candidate network devices, the terminal device may determine the first time based on the first configuration information corresponding to the second network device, and is redirected to the second network device based on the first time.

It should be noted that, for a specific manner in which the terminal device is redirected to the second network device based on the first time, refer to the foregoing descriptions. Details are not described herein again.

Optionally, the first configuration information corresponding to the candidate network device may further include type indication information of the candidate network device. The type indication information may indicate a type of a corresponding candidate network device. For example, the type of the candidate network device may be a terrestrial network device, a non-terrestrial network device, or relay UE.

Correspondingly, after the terminal device determines the second network device from the plurality of candidate network devices, in a process of redirecting to the second network device, the terminal device may determine, based on the type indication information of the second network device, a procedure of redirecting to the second network device.

For example, if the type indication information indicates that a type of the second network device is the terrestrial network device or the non-terrestrial network device, the terminal device determines to initiate a Uu interface setup procedure to the second network device. If the type indication information indicates that the type of the second network device is the relay UE, the terminal device determines to initiate a PC-5 interface setup procedure to the second network device.

### Case 2:

In an access process of the terminal device (or in a process of providing a service for the terminal device), the first network device preconfigures, for the terminal device based on the first message, first configuration information and a configuration parameter that correspond to at least one network device.

For example, the first message may be an RRC reconfiguration message. The first message is used to reconfigure the terminal device.

The first configuration information corresponding to the network device is associated with first time corresponding to the network device, and the first time corresponding to the network device is time at which the corresponding network device allows access of the terminal device, or the first time corresponding to the network device may be understood as time at which the corresponding network device covers the location of the terminal device. The configuration parameter corresponding to the network device may include frequency information, SMTC information, and the like.

The following describes content of the first message in detail.

When the first message carries first configuration information and a configuration parameter that correspond to one network device, the first message may carry the first configuration information and a configuration parameter that correspond to the second network device. Correspondingly, when performing redirection, the terminal device determines, based on the first configuration information corresponding to the second network device, the first time corresponding to the second network device, and is redirected to the second network device based on the first time corresponding to the second network device.

When the first message carries first configuration information and configuration parameters that correspond to a plurality of network devices, the first message may carry first configuration information and configuration parameters that correspond to a plurality of candidate network devices. Correspondingly, when performing redirection, the terminal device is redirected to the second network device in the plurality of candidate network devices.

The following separately provides descriptions based on different information content carried in the first message.
1. The first message includes the first configuration information and the configuration parameter that correspond to the second network device.

In a process in which the terminal device accesses the first network device, the first network device may configure, for the terminal device based on the first message, the first configuration information and the configuration parameter that correspond to the second network device. The second network device may be a network device that is preconfigured by the first network device for the terminal device and that is to be accessed when redirection is triggered. For example, the second network device is a next network device that covers the location of the terminal device.

For the first configuration information and the configuration parameter that correspond to the second network device, refer to the descriptions in Case 1. Details are not described herein again.

After receiving the first message, the terminal device may store the first configuration information and the configuration parameter that correspond to the second network device and that are configured by the first network device based on the first message.

When the first network device determines that the terminal device meets a redirection condition (for example, the terminal device is located at an edge location of the coverage region of the first network device, or the first network device is currently overloaded), the first network device sends a second message to the terminal device, where the second message indicates the terminal device to perform the redirection operation.

Optionally, the first network device may send the second message to the terminal device by using a media access control (media access control, MAC) control element (control element, CE) or downlink control information (downlink control information, DCI).

For example, the second message may be a redirection message, or may be referred to as an RRC connection release message. The second message indicates the terminal device to release an RRC connection to the first network device, and perform the redirection operation.

Correspondingly, the terminal device receives the second message from the first network device, and the terminal device is redirected to the second network device.

The terminal device determines, based on the first configuration information corresponding to the second network device, the first time corresponding to the second network device, and is redirected to the second network device based on the first time corresponding to the second network device.

It should be noted that, for a specific manner in which the terminal device determines the first time corresponding to the second network device and is redirected to the second network device based on the first time corresponding to the second network device, refer to the descriptions in Case 1. Details are not described herein again.

Optionally, the first configuration information may further include type indication information of a corresponding network device. The type indication information may indicate a type of a corresponding network device. For example, the type of the network device may be a terrestrial network device, a non-terrestrial network device, or relay UE.

Correspondingly, the terminal device may determine, based on type indication information in the first configuration information corresponding to the second network device, a procedure of redirecting to the second network device.

For example, if the type indication information indicates that a type of the second network device is the terrestrial network device or the non-terrestrial network device, the terminal device determines to initiate a Uu interface setup procedure to the second network device. If the type indication information indicates that the type of the second network device is the relay UE, the terminal device determines to initiate a PC-5 interface setup procedure to the second network device.

2. The first message includes the first configuration information and the configuration parameters that correspond to the plurality of candidate network devices.

In a process in which the terminal device accesses the first network device, the first network device may configure, for the terminal device based on the first message, the first configuration information and the configuration parameters that correspond to the plurality of candidate network devices.

For the first configuration information and the configuration parameter that correspond to the candidate network device, refer to the descriptions in Case 1. Details are not described herein again.

After receiving the first message, the terminal device may store the first configuration information and the configuration parameters that correspond to the plurality of candidate network devices and that are configured by the first network device based on the first message.

In this case, when the first network device configures, for the terminal device, the first configuration information and the configuration parameters that correspond to the plurality of candidate network devices, in this embodiment of this application, the first network device may trigger the terminal device to perform the redirection operation, or the terminal device may trigger to perform the redirection operation. The following separately describes different redirection trigger manners.

Redirection trigger manner 1: The first network device triggers the terminal device to perform the redirection operation.

When the first network device determines that the terminal device meets the redirection condition (for example, the terminal device is located at the edge location of the coverage region of the first network device, or the first network device is currently overloaded), the first network device triggers the terminal device to perform the redirection operation.

In a possible implementation, the first network device sends the second message to the terminal device, where the second message indicates the terminal device to perform the redirection operation.

The first network device may send the second message to the terminal device by using the MAC CE or the DCI.

For example, the second message may be the redirection message, or may be referred to as the RRC connection release message. The second message indicates the terminal device to release the RRC connection to the first network device, and perform the redirection operation.

When determining that the terminal device meets the redirection condition, the first network device may determine the second network device from the plurality of candidate network devices, and send first indication information to the terminal device, where the first indication information indicates the second network device. For example, the first indication information may be identification information of the second network device.

Optionally, the first network device may carry the first indication information in the second message, or the second message and the second indication information may be sent separately.

Correspondingly, the terminal device receives the first indication information from the first network device, and determines the second network device from the plurality of candidate network devices based on the first indication information.

Redirection trigger manner 2: The terminal device triggers to perform the redirection operation.

In this redirection trigger manner, in this embodiment of this application, at least one redirection trigger condition for triggering the redirection operation by the terminal device may be defined. When determining, based on the defined at least one redirection trigger condition, that one or more redirection trigger conditions are met, the terminal device determines to trigger the redirection operation.

Optionally, a type of the redirection trigger condition in this embodiment of this application may include a signal condition, a location condition, and a time condition.

For example, the signal condition may include: A link is interrupted, air interface signal quality is poor (for example, signal quality may be evaluated by using a plurality of different air interface signal quality indicators), a bit error rate is higher than a threshold, and the like. For example, in the process in which the terminal device accesses the first network device, if the terminal device determines that a link is interrupted, the terminal device determines that the redirection trigger condition is met, and the terminal device triggers the redirection operation. For another example, in the process in which the terminal device accesses the first network device, if the terminal device determines that air interface signal quality is poor, the terminal device determines that the redirection trigger condition is met, and the terminal device triggers the redirection operation.

For example, the location condition may include: A pitch angle of the terminal device relative to the first network device is less than a threshold. For example, in the process in which the terminal device accesses the first network device, if the terminal device determines that the pitch angle of the terminal device relative to the first network device is less than the threshold, it may indicate that the terminal device is currently located at the edge location of the coverage region of the first network device. In this case, the terminal device determines that the redirection trigger condition is met, and the terminal device triggers the redirection operation.

For example, the time condition may include: The time range within which the first network device covers the location of the terminal device exceeds. For example, in the process in which the terminal device accesses the first network device, if the terminal device determines, based on the time range within which the first network device covers the location of the terminal device, that a current moment exceeds the time range, the terminal device determines that the redirection trigger condition is met, and the terminal device triggers the redirection operation.

In a possible implementation, when the first network device configures, for the terminal device based on the first message, the first configuration information and the configuration parameters that correspond to the plurality of candidate network devices, and defines a plurality of trigger conditions, a correspondence between a candidate network device and a trigger condition may be established in this embodiment of this application.

Optionally, the terminal device determines that a first redirection trigger condition among the at least one redirection trigger condition is met, and the terminal device determines that a candidate network device among the plurality of candidate network devices that corresponds to the first redirection trigger condition is the second network device.

For example, the at least one redirection trigger condition includes a redirection trigger condition 1 (the link is interrupted), a redirection trigger condition 2 (the air interface signal quality is poor), and a redirection trigger condition 3 (the pitch angle of the terminal device relative to the first network device is less than the threshold); and the plurality of candidate network devices include a candidate network device A, a candidate network device B, and a candidate network device C. In addition, the redirection trigger condition 1 corresponds to the candidate network device A, the redirection trigger condition 2 corresponds to the candidate network device B, and the redirection trigger condition 3 corresponds to the candidate network device C. If the terminal device determines that the redirection trigger condition 1 is currently met, the terminal determines that the candidate network device A is the second network device.

In another possible implementation, after determining that the first redirection trigger condition among the at least one redirection trigger condition is met, the terminal device determines the second network device from the plurality of candidate network devices. A specific manner in which the terminal device determines the second network device from the plurality of candidate network devices is not limited in this embodiment of this application. For example, the terminal device may select, from the plurality of candidate network devices based on channel measurement, a candidate network device with good channel quality as the second network device. For another example, the terminal device may determine, as the second network device based on ephemeris information of the plurality of candidate network devices, a candidate network device that is close to the terminal device.

After determining the second network device, the terminal device determines, based on the first configuration information corresponding to the second network device, the first time corresponding to the second network device, and is redirected to the second network device based on the first time corresponding to the second network device.

It should be noted that, for a specific manner in which the terminal device determines the first time corresponding to the second network device and is redirected to the second network device based on the first time corresponding to the second network device, refer to the descriptions in Case 1. Details are not described herein again.

Optionally, the first configuration information corresponding to the candidate network device may further include type indication information of the candidate network device. The type indication information may indicate a type of a corresponding candidate network device. For example, the type of the candidate network device may be a terrestrial network device, a non-terrestrial network device, or relay UE.

Correspondingly, after the terminal device determines the second network device based on the first indication information, in a process of redirecting to the second network device, the terminal device may determine, based on type indication information of the second network device, a procedure of redirecting to the second network device.

For example, if the type indication information indicates that a type of the second network device is the terrestrial network device or the non-terrestrial network device, the terminal device determines to initiate a Uu interface setup procedure to the second network device. If the type indication information indicates that the type of the second network device is the relay UE, the terminal device determines to initiate a PC-5 interface setup procedure to the second network device.

Based on the technical solution provided in Case 2, the first network device preconfigures, for the terminal device, the first configuration information and the configuration parameter that correspond to the at least one network device. In this way, when the first network device encounters an emergency (for example, an air interface link is suddenly interrupted, or network load suddenly increases sharply), the first network device does not need to send, to the terminal device, the first configuration information and the configuration parameter that correspond to the at least one network device, and can quickly trigger the terminal device to perform the redirection operation.

### Case 3:

The first network device triggers, by terminal group, a terminal device in a terminal group to perform the redirection operation.

In this case, the first network device groups a plurality of accessed terminal devices.

When the first network device groups the plurality of accessed terminal devices, in this embodiment of this application, terminal grouping can be implemented in a plurality of different manners:

Grouping implementation 1: The first network device indicates, to each accessed terminal device, a terminal group to which the terminal device belongs.

The first network device groups all the accessed terminal devices into a plurality of groups, and sends, to each accessed terminal device, identification information of the terminal group to which each accessed terminal device belongs.

For example, the first network device may send, to each accessed terminal device through unicast, a group number of the terminal group to which the terminal device belongs.

Grouping implementation 2: The first network device groups the accessed terminal devices according to a grouping rule. Correspondingly, the terminal device determines, according to the same grouping rule, the group to which the terminal device belongs.

In this grouping implementation, the first network device and the terminal device may agree on the grouping rule, and the first network device and the terminal device determine, according to the same grouping rule, the terminal group to which the terminal device belongs.

For example, the grouping rule may be a manner of performing a modulo operation on identification information (ID) of the terminal device, to obtain the group number of the terminal group to which the terminal device belongs.

When determining to perform a redirection operation on at least one terminal group, the first network device sends a first message, where the first message indicates a terminal device in the at least one terminal group to perform the redirection operation.

The first message may include identification information of at least one terminal group.

Optionally, the first message may be common control signaling. For example, the first message may be a SIB message, or the first message may be broadcast or multicast MAC CE signaling, or the first message may be DCI scrambled by a common radio network temporary identifier (radio network temporary identifier, RNTI).

For example, when determining that a feeder link (feeder link, a link between a satellite and a terrestrial station) fails, the first network device may determine to perform the redirection operation on the at least one terminal group.

Optionally, the first message may further include first configuration information and a configuration parameter that correspond to at least one network device. The first configuration information corresponding to the network device is associated with first time corresponding to the network device, and the configuration parameter may include frequency information, SMTC information, and the like.

In this embodiment of this application, the first network device may determine a second network device corresponding to each terminal group that needs to be redirected, where the second network device is a network device to which a terminal device in the corresponding terminal group is to be redirected. The first message sent by the first network device includes first configuration information and a configuration parameter that correspond to a second network device corresponding to each terminal group that needs to be redirected.

For the first configuration information and the configuration parameter that correspond to the second network device, refer to the descriptions in Case 1. Details are not described herein again.

The terminal device receives the first message. If determining that the first message indicates the terminal group to which the terminal device belongs, the terminal device determines, based on the first configuration information of the second network device corresponding to the terminal group to which the terminal device belongs, the first time corresponding to the second network device, and is redirected to the second network device based on the first time corresponding to the second network device.

Alternatively, in this embodiment of this application, the first network device may further carry, in the first message, first configuration information and configuration parameters that correspond to a plurality of candidate network devices. After receiving the first message, if the terminal device determines that the first message includes the identification information of the terminal group to which the terminal device belongs, the terminal device may determine the second network device from the plurality of candidate network devices.

For the first configuration information and the configuration parameter that correspond to the candidate network device, refer to the descriptions in Case 1. Details are not described herein again.

The terminal device receives the first message, determines, based on the first configuration information corresponding to the determined second network device, the first time corresponding to the second network device, and is redirected to the second network device based on the first time corresponding to the second network device.

It should be noted that, for a specific manner in which the terminal device determines the first time corresponding to the second network device and is redirected to the second network device based on the first time corresponding to the second network device, refer to the descriptions in Case 1. Details are not described herein again.

Embodiments of this application further provide a communication method and an apparatus. When determining that the first network device cannot provide a service for the terminal device, the first network device may indicate the terminal device to transit to inactive state, and may indicate a start condition for state recovery of the terminal device. The terminal device accesses the network device after determining that the start condition is met, thereby avoiding unnecessary access.

FIG. 6 shows a communication method according to an embodiment of this application. The method may specifically include the following steps.

Step 600: A terminal device receives second indication information from a first network device.

Correspondingly, the first network device generates the second indication information, and sends the second indication information to the terminal device.

The second indication information indicates the terminal device to perform state transition.

For example, the second indication information may indicate the terminal device to transit from current connected state to inactive state (inactive state).

Step 601: The terminal device transits from the current connected state to the inactive state.

Connected state of the terminal device: A connection is set up between the terminal device and an access network device, and a connection is set up between the access network device and a core network for the terminal device. Data transmission can be performed at any time. In this state, no setup delay is required, and the delay is therefore the shortest.

Inactive state of the terminal device: The inactive state may also be referred to as deactivated state, and is a state between the connected state and idle state. No connection is set up between the terminal device and the access network device, but a connection is set up between the access network device and the core network for the terminal device. Once there is data to be sent to the terminal device, the access network device delivers paging. After receiving the paging, the terminal device can quickly set up a connection to the access network device, and the terminal device may transit from the inactive state to the connected state.

Step 602: After meeting a start condition for the terminal device to perform state recovery, the terminal device transits from the inactive state to the connected state, and accesses a third network device.

That the terminal device performs state recovery may be that the terminal device transits from the inactive state to the connected state.

In this embodiment of this application, the start condition for the terminal device to perform state recovery may be configured in a plurality of manners in this embodiment of this application.

Start condition configuration manner 1: The first network device configures the start condition for the terminal device.

The first network device may send third indication information to the terminal device, where the third indication information indicates the start condition for the terminal device to perform state recovery.

In this embodiment of this application, the first network device may send the second indication information and the third indication information by using one message (or signaling). For example, the first network device sends an RRC release message to the terminal device, where the RRC release message includes the second indication information and the third indication information. Alternatively, the first network device may send the second indication information and the third indication information by using different messages (or signaling).

Start condition configuration manner 2: The terminal device preconfigures the start condition for performing state recovery.

In this embodiment of this application, the start condition for performing state recovery may be preconfigured on the terminal device. For example, the start condition for performing state recovery is pre-stored in the terminal device.

Optionally, the start condition includes at least one of the following:
time information for the terminal device to perform state recovery, location information of the terminal device when the terminal device performs state recovery, and signal quality of a downlink signal received by the terminal device meeting a threshold.

The following separately describes these start conditions.
1. Time information for the terminal device to perform state recovery

The first network device may configure, for the terminal device, the time information for performing state recovery. For example, the time information may be a time range.

Correspondingly, after determining that time corresponding to the time information is reached, the terminal device determines that the start condition is met.

2. Location information of the terminal device when the terminal device performs state recovery

The first network device configures, for the terminal device, the location information for performing state recovery. For example, the location information may be a region, or the location information may be a relative location relationship between the terminal device and a reference point (for example, a distance between a location of the terminal device and the reference point is less than a threshold).

Correspondingly, if the location information is the region, after determining that the terminal device is located in the region, the terminal device determines that the start condition is met. Alternatively, if the location information is that the distance between the terminal device and the reference point is less than the threshold, after determining that a distance between a current location of the terminal device and the reference location is less than the threshold, the terminal device determines that the start condition is met.

3. Signal quality of the downlink signal received by the terminal device meeting the threshold

That the signal quality of the downlink signal meets the threshold may be understood as that a signal quality indicator (or parameter) of the downlink signal meets the threshold.

The first network device may configure, for the terminal device, at least one indicator or parameter representing the signal quality of the downlink signal, and configure a threshold corresponding to each indicator or parameter. Correspondingly, the terminal device measures the downlink signal, and if detecting that the indicator or parameter of the signal quality meets the corresponding threshold, the terminal device determines that the start condition is met.

After determining that the start condition is met, the terminal device performs state recovery, transits from the inactive state to the connected state, and accesses the third network device. The third network device and the first network device may be a same network device, or the third network device may be a network device different from the first network device.

In this embodiment of this application, the first network device may send fourth indication information to the terminal device, where the fourth indication information includes access information of the third network device. Correspondingly, the terminal device receives the fourth indication information from the first network device.

For example, the access information of the third network device may include information such as identification information of the third network device and frequency of the third network device.

After determining that the start condition is met, the terminal device sets up a connection to the third network device.

For example, the terminal device may send RRC Resume to the third network device, where the RRC Resume may be signaling sent by the terminal device when the terminal device transits from the inactive state to the connected state, and is used to request to set up the connection to the third network device.

Based on the solution provided in this embodiment of this application, when determining that the first network device cannot provide a service for the terminal device, the first network device may indicate the terminal device to transit from the connected state to the inactive state, and suspend providing the service for the terminal device. In addition, the terminal device is indicated, in a manner of indicating the start condition for state recovery, to transit back to the connected state when the terminal device can be provided with a service again. After determining that the start condition is met, the terminal device transits to the connected state and accesses the third network device, to avoid an access failure caused when the terminal device initiates access when an access condition is not met.

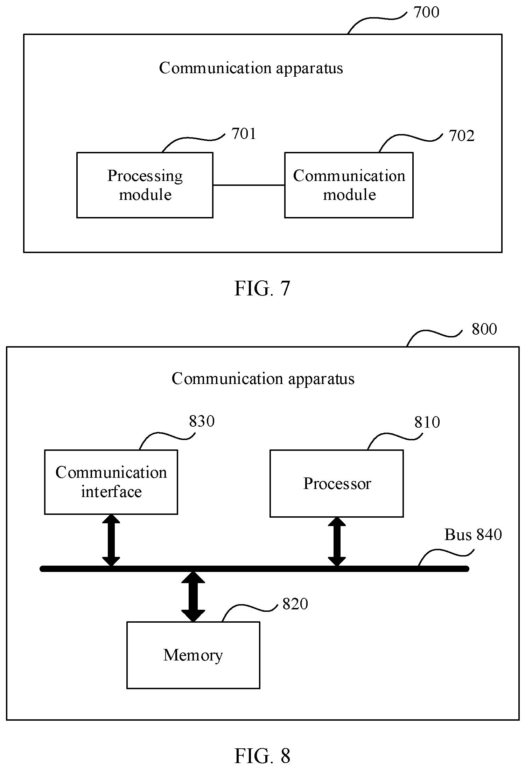

Based on a same concept, refer to FIG. 7. An embodiment of this application provides a communication apparatus 700. The communication apparatus 700 includes a processing module 701 and a communication module 702. The communication apparatus 700 may be a terminal device, or may be a communication apparatus that is used in the terminal device or that is used in matching with the terminal device and that can implement the communication method performed on a terminal device side. Alternatively, the communication apparatus 700 may be a first network device, or may be a communication apparatus that is used in the first network device or that is used in matching with the first network device and that can implement the communication method performed by the first network device.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation of the terminal device or the first network device in the foregoing method. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 700 is used in the terminal device, the processing module 701 may be configured to implement a processing function of the terminal device in the embodiment shown in FIG. 5 or FIG. 6, and the communication module 702 may be configured to implement receiving and sending functions of the terminal device in the embodiment shown in FIG. 5 or FIG. 6.

When the communication apparatus 700 is used in the first network device, the processing module 701 may be configured to implement a processing function of the first network device in the embodiment shown in FIG. 5 or FIG. 6, and the communication module 702 may be configured to implement receiving and sending functions of the first network device in the embodiment shown in FIG. 5 or FIG. 6.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by a physical apparatus. For example, if the communication apparatus is implemented by a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, or an integrated circuit.

Division into the modules in this embodiment of this application is an example, is merely logical function division, and may be other division during actual implementation. In addition, functional modules in each of embodiments of this application may be integrated into one processor, each of the modules may exist alone physically, or two or more modules may be integrated into one module. The integrated module may be implemented in a form of hardware, or may be implemented in a form of a software functional module.

Based on a same technical concept, an embodiment of this application further provides a communication apparatus 800. For example, the communication apparatus 800 may be a chip or a chip system. Optionally, in this embodiment of this application, the chip system may include a chip, or may include a chip and another discrete component.

The communication apparatus 800 may be configured to implement a function of the terminal device or the first network device described in the foregoing embodiments. The communication apparatus 800 may include at least one processor 810. The processor 810 is coupled to a memory. Optionally, the memory may be located inside the communication apparatus, the memory may be integrated with the processor, or the memory may be located outside the communication apparatus. For example, the communication apparatus 800 may further include at least one memory 820. The memory 820 stores a necessary computer program, a computer program, or instructions and/or data for implementing any one of the foregoing embodiments. The processor 810 may execute the computer program stored in the memory 820, to complete the method in any one of the foregoing embodiments.

The communication apparatus 800 may further include a communication interface 830. The communication apparatus 800 may exchange information with another device through the communication interface 830. For example, the communication interface 830 may be a transceiver, a circuit, a bus, a module, a pin, or another type of communication interface. When the communication apparatus 800 is a chip-type apparatus or circuit, the communication interface 830 in the communication apparatus 800 may alternatively be an input/output circuit, and may input information (or referred to as receiving the information) and output information (or referred to as sending the information). The processor is an integrated processor, a microprocessor, an integrated circuit, or a logic circuit, and the processor may determine output information based on input information.

The coupling in this embodiment of this application is an indirect coupling or a communication connection between apparatuses, units, or modules in an electrical form, a mechanical form, or another form, and is used for information exchange between the apparatuses, the units, or the modules. The processor 810 may operate cooperatively with the memory 820 and the communication interface 830. A specific connection medium between the processor 810, the memory 820, and the communication interface 830 is not limited in embodiments of this application.

Optionally, refer to FIG. 8. The processor 810, the memory 820, and the communication interface 830 are connected to each other through a bus 840. The bus 840 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one thick line is for representing the bus in FIG. 8, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed and completed by using a combination of hardware in the processor and a software module.

In embodiments of this application, the memory may be a non-volatile memory, a hard disk drive (hard disk drive, HDD) or a solid-state drive (solid-state drive, SSD), or may be a volatile memory (volatile memory), for example, a random access memory (random access memory, RAM). The memory is any other medium that can be used to carry or store expected program code in a form of instructions or a data structure and that can be accessed by a computer, but is not limited thereto. The memory in this embodiment of this application may alternatively be a circuit or any other apparatus that can implement a storage function, and is configured to store program instructions and/or data.

The communication apparatus 800 may be used in a terminal device. Specifically, the communication apparatus 800 may be a terminal device, or may be an apparatus that can support the terminal device in implementing functions of the terminal device in any one of the foregoing embodiments. The memory 820 stores a computer program (or instructions) and/or data for implementing the function of the terminal device in any one of the foregoing embodiments. The processor 810 may execute the computer program stored in the memory 820, to complete the method performed by the terminal device in any one of the foregoing embodiments. When the communication apparatus 800 is used in the terminal device, the communication interface in the communication apparatus 800 may be configured to: interact with another communication apparatus (for example, a first network device or a second network device), and send information to the another communication apparatus or receive information from the another communication apparatus.

The communication apparatus 800 may be used in the terminal device. Specifically, the communication apparatus 800 may be a first network device, or may be an apparatus that can support the first network device in implementing functions of the first network device in any one of the foregoing embodiments. The memory 820 stores a computer program (or instructions) and/or data for implementing the function of the first network device in any one of the foregoing embodiments. The processor 810 may execute the computer program stored in the memory 820, to complete the method performed by the first network device in any one of the foregoing embodiments. When the communication apparatus 800 is used in the first network device, the communication interface in the communication apparatus 800 may be configured to: interact with another communication apparatus (for example, a terminal device), and send information to the another communication apparatus or receive information from the another communication apparatus.

The technical solutions provided in embodiments of this application may be fully or partially implemented through software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, a terminal device, an access network device, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, without a logical contradiction, embodiments may be mutually referenced. For example, methods and/or terms in the method embodiments may be mutually referenced. For example, functions and/or terms in the apparatus embodiments may be mutually referenced. For example, functions and/or terms in the apparatus embodiments and the method embodiments may be mutually referenced.

It is clear that a person skilled in the art can make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

## Claims

1. A communication method, applied to a terminal device, wherein the method comprises:
receiving a first message from a first network device, wherein the first message comprises first configuration information corresponding to a second network device, the first configuration information is associated with first time, and the first time is time at which the network device corresponding to the first configuration information allows access of the terminal device; and
redirecting to the second network device based on the first message.

2. The method according to claim 1, wherein the first configuration information corresponding to the second network device indicates the second network device, and the method further comprises:
receiving ephemeris information of the second network device; and
determining, based on the ephemeris information of the second network device, the first time corresponding to the second network device.

3. The method according to claim 1, wherein the first configuration information corresponding to the second network device indicates the first time.

4. The method according to any one of claims 1 to 3, wherein the first message comprises the first configuration information corresponding to a plurality of candidate network devices, and the method further comprises:
determining the second network device from the plurality of candidate network devices.

5. The method according to claim 4, wherein the first message further comprises second configuration information corresponding to each candidate network device, and the second configuration information is used to represent an access capability of a corresponding candidate network device; and determining the second network device from the plurality of candidate network devices comprises:
determining the second network device from the plurality of candidate network devices based on the second configuration information corresponding to each candidate network device.

6. The method according to claim 4 or 5, wherein the second configuration information comprises load information and/or priority information of a corresponding candidate network device.

7. The method according to claim 4, wherein determining the second network device from the plurality of candidate network devices comprises:
receiving first indication information from the first network device, wherein the first indication information indicates the second network device; and
determining the second network device from the plurality of candidate network devices based on the first indication information.

8. The method according to claim 5, wherein determining the second network device from the plurality of candidate network devices comprises:
determining that a first redirection trigger condition among at least one redirection trigger condition is met; and
determining that a candidate network device among the plurality of candidate network devices that corresponds to the first redirection trigger condition is the second network device.

9. The method according to any one of claims 1 to 8, wherein the first configuration information further comprises type indication information of a corresponding network device.

10. The method according to claim 9, wherein the method further comprises: determining, based on the type indication information, a procedure of redirecting to the second network device.

11. The method according to any one of claims 1 to 10, wherein the first message comprises identification information of at least one terminal group, and the at least one terminal group comprises the terminal device.

12. A communication method, applied to a terminal device, wherein the method comprises:
receiving second indication information from the first network device, wherein the second indication information indicates the terminal device to perform state transition;
transiting from current connected state to inactive state; and
after a start condition for the terminal device to perform state recovery is met, transiting from the inactive state to the connected state, and accessing a third network device.

13. The method according to claim 12, wherein the method further comprises:
receiving third indication information from the first network device, wherein the third indication information indicates the start condition.

14. The method according to claim 12 or 13, wherein the start condition comprises at least one of the following:
time information for the terminal device to perform state recovery, location information of the terminal device when the terminal device performs state recovery, and signal quality of a downlink signal received by the terminal device meeting a threshold.

15. The method according to any one of claims 12 to 14, wherein the method further comprises:
receiving fourth indication information from the first network device, wherein the fourth indication information comprises access information of the third network device.

16. A communication method, applied to a first network device, wherein the method comprises:
generating a first message, wherein the first message comprises first configuration information corresponding to a second network device, the first configuration information is associated with first time, the first time is time at which the network device corresponding to the first configuration information allows access of a terminal device, and the second network device is a network device to which the terminal device is to be redirected; and
sending the first message to the terminal device.

17. The method according to claim 16, wherein the first configuration information corresponding to the second network device indicates the second network device.

18. The method according to claim 17, wherein the method further comprises:
sending ephemeris information of the second network device to the terminal device.

19. The method according to claim 16, wherein the first configuration information corresponding to the second network device indicates the first time.

20. The method according to any one of claims 16 to 19, wherein the first message comprises the first configuration information corresponding to a plurality of candidate network devices, and the plurality of candidate network devices comprise the second network device.

21. The method according to claim 20, wherein the first message further comprises second configuration information corresponding to each candidate network device, and the second configuration information is used to represent an access capability of a corresponding candidate network device.

22. The method according to claim 21, wherein the second configuration information comprises load information and/or priority information of a corresponding candidate network device.

23. The method according to claim 20, wherein the method further comprises:
sending first indication information to the terminal, wherein the first indication information indicates the second network device.

24. The method according to any one of claims 16 to 23, wherein the first configuration information further comprises type indication information of a corresponding network device.

25. The method according to any one of claims 16 to 24, wherein the first message comprises identification information of at least one terminal group, and the at least one terminal group comprises the terminal device.

26. A communication method, applied to a first network device, wherein the method comprises:
generating second indication information, wherein the second indication information indicates a terminal device to transit from connected state to inactive state; and
sending the second indication information to the terminal device.

27. The method according to claim 26, wherein the method further comprises:
generating third indication information, wherein the third indication information indicates a start condition for the terminal device to perform state recovery, and the state recovery comprises transiting from the inactive state to the connected state; and
sending the third indication information to the terminal device.

28. The method according to claim 26 or 27, wherein the start condition comprises at least one of the following:
time information for the terminal device to perform state recovery, location information of the terminal device when the terminal device performs state recovery, and signal quality of a downlink signal received by the terminal device meeting a threshold.

29. The method according to any one of claims 26 to 28, wherein the method further comprises:
sending fourth indication information to the terminal device, wherein the fourth indication information comprises access information of the third network device.

30. A communication apparatus, comprising a module configured to perform the method according to any one of claims 1 to 11, or a module configured to perform the method according to any one of claims 12 to 15, or a module configured to perform the method according to any one of claims 16 to 25, or a module configured to perform the method according to any one of claims 26 to 29.

31. A communication apparatus, comprising a processor, wherein the processor is coupled to a memory, the memory is configured to store a computer program or instructions, and the processor is configured to execute the computer program or the instructions, to implement the method according to any one of claims 1 to 11, or implement the method according to any one of claims 12 to 15, or implement the method according to any one of claims 16 to 25, or implement the method according to any one of claims 26 to 29.

32. A communication apparatus, comprising an interface circuit and a logic circuit, wherein
the interface circuit is configured to communicate with a module outside the communication apparatus; and
the logic circuit is configured to execute a computer program, so that the communication apparatus performs the method according to any one of claims 1 to 11, or performs the method according to any one of claims 12 to 15, or performs the method according to any one of claims 16 to 25, or performs the method according to any one of claims 26 to 29.

33. A communication system, comprising a terminal device configured to perform the method according to any one of claims 1 to 11 and 16 to 25, and a first network device configured to perform the method according to any one of claims 12 to 15 and 26 to 29.

34. A computer-readable storage medium, wherein the computer-readable storage medium stores a computer program or instructions, and when the instructions are run on a computer, the method according to any one of claims 1 to 11 is implemented, or the method according to any one of claims 12 to 15 is implemented, or the method according to any one of claims 16 to 25 is implemented, or the method according to any one of claims 26 to 29 is implemented.

35. A computer program product, comprising a computer program, wherein when the computer program is executed by a communication apparatus, the method according to any one of claims 1 to 11 is implemented, or when the computer program is executed by a communication apparatus, the method according to any one of claims 12 to 15 is implemented, or when the computer program is executed by a communication apparatus, the method according to any one of claims 16 to 25 is implemented, or when the computer program is executed by a communication apparatus, the method according to any one of claims 26 to 29 is implemented.

36. A chip system, comprising a processor, wherein the processor is configured to perform the method according to any one of claims 1 to 11, or perform the method according to any one of claims 12 to 15, or perform the method according to any one of claims 16 to 25, or perform the method according to any one of claims 26 to 29.
